# EUROPEAN PATENT SPECIFICATION

(11) **EP 2 123 967 B1**
(45) Date of publication and mention of the grant of the patent: **16.07.2014**
(21) Application number: 09251272.2
(22) Date of filing: 07.05.2009
(51) Int. Cl.: F16M 11/22

(54) **A support device**
Stützvorrichtung
Dispositif de support

(30) Priority: 20.05.2008 GB 0809175
(43) Date of publication of application: 25.11.2009
(73) Proprietor: Fox International Group Limited, Hainault, Essex IG6 3UT (GB)
(72) Inventor: Taylor, Adam, Loughton, Essex IG10 2QH (GB)
(74) Representative: Crouch, David John

(56) References cited:
- EP-A1- 1 385 145
- JP-A- 2004 286 231
- US-A1- 2002 125 381

## Description

The present invention relates to a support device having at least two legs which can be splayed apart by differing amounts, especially but not exclusively to an angling rod pod having such legs.

Numerous such devices have already been proposed, for example tripod stands for cameras or telescopes.

A tripod stand according to the preamble of claim 1 is known from JP 2004286231.

A disadvantage of such constructions is their complexity both in construction and ease of use.

The present invention seeks to provide a remedy by proposing a support device according to claim 1.

Accordingly, the present invention is directed to a support device having at least two leg portions which can be splayed apart by different amounts, in which intended respective upper ends of the said at least two leg portions pivot about respective pivots and interengage one another by intermeshing gear teeth so that when one of the leg portions is pivoted about its pivot through a given angle in a clockwise sense, the other leg portion is pivoted about its pivot through the same angle in an anticlockwise sense, the device also having a detent which engages the intended upper end of at least one of the said at least two leg portions to lock it in a selected position, so that the other of the said at least two leg portions is also locked in a corresponding position.

Preferably, the engagement between the detent and the intended upper end of the said at least one of the said at least two leg portions is such as to allow the leg portions to be locked in any selected one of a plurality of different positions in which the leg portions are splayed by respective different amounts. This facilitates different settings of the support device appropriate for different conditions of use.

The detent may engage gear teeth at the intended upper end of the said at least one of the said two leg portions. This provides an efficient use of the gear teeth both to keep a symmetry in the angular position of the said at least two leg portions and also to lock them at a desired setting.

The detent itself may have a plurality of teeth which interengage with those of the intended upper end of the said at least one of the said at least two leg portions. The detent may be moved between a position in which it engages the intended upper end of the said at least one of the said at least two leg portions to a position in which it is disengaged therefrom, by upward and downward movement of the detent. This enables a relatively straightforward engagement/disengagement action.

Preferably the detent is constrained to such upward/downward movement by wall portions of the device.

Preferably the detent is provided with a snap action device to enable it to be moved into its locking position by way of a snap action. This improves the security of the locking of the leg portions.

One way such a snap action can be achieved is by having the detent coupled by a pivotal linkage to a lever which is itself pivoted at one end so as to be pivotal between an open position in which the detent is in a raised disengaging position and a closed position in which the linkage is beyond a dead point so that the lever has been snapped into its closed position and the detent is in a lowered locking position.

This provides for an especially simple and effective security for keeping the detent in its locking position.

Such a support device as described by one or more of the foregoing paragraphs is especially useful if it constitutes an angling rod pod.

An example of a support device embodying the present invention will now be described in greater detail with reference to the accompanying drawings, in which:
- Figure 1: shows a front view of the support device with the leg portions thereof splayed apart by a given amount;
- Figure 2: shows the same view of the device shown in Figure 1, but with a detent operating lever in a raised position;
- Figures 3: and 4 show the same view of the device shown in Figure 1, but with the leg portions splayed apart by different respective amounts;
- Figure 5: shows a side view of the device shown in Figure 1;
- Figure 6: shows a cross-section of the device shown in Figures 1 and 5 taken in the plane indicated by the lines VI-VI in Figure 5;
- Figure 7: shows the same cross-sectional view as shown in Figure 6, but with a detent operating lever thereof in a raised position;
- Figures 8: and 9 show the same cross-sectional view as is shown in Figure 6, but with intended upper leg ends thereof in different respective positions corresponding to the positions of the leg portions in Figures 3 and 4;
- Figure 10: shows a cross-sectional view of the device shown in Figure 1 in the plane indicated by the line X-X in Figure 1;
- Figure 11: shows the same cross-sectional view as is shown in Figure 10, but with a detent operating lever of the device in a raised position; and
- Figures 12: and 13 show the same cross-sectional view of the device as is shown in Figure 10, but with leg portions thereof in different respective positions corresponding to the positions shown in Figures 3 and 4.

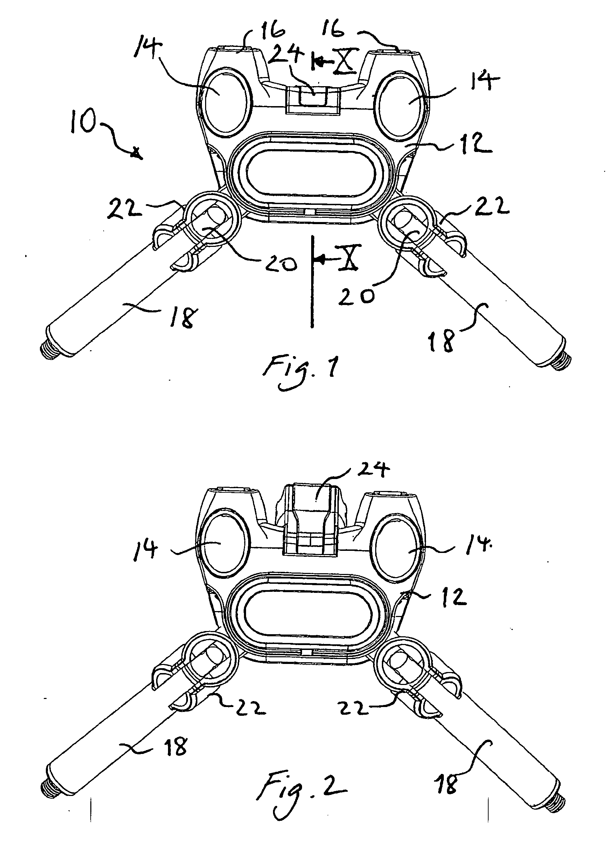

The support device 10 shown in Figures 1 to 4 comprises a housing block 12 provided with two apertures 14 to receive respective horizontal bars (not shown), and respective cam locks 16 to lock such horizontal bars within the apertures 14 once they have been inserted therin.

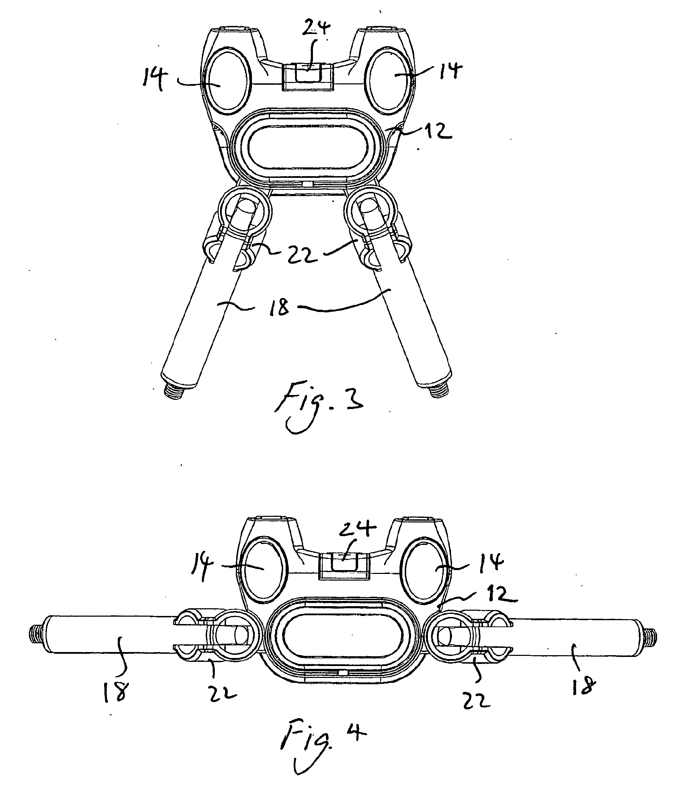

Two elongate leg portions 18 have respective upper ends 20 inserted into the intended respective upper leg ends 22. The latter extend generally downwardly and/or outwardly from the housing block 12 and may be pivoted relative to the housing block 12 between different positions in which they are splayed by respective differing amounts as shown in Figures 3 and 4. In the position shown in Figure 4, they are in the same generally horizontal plane as one another.

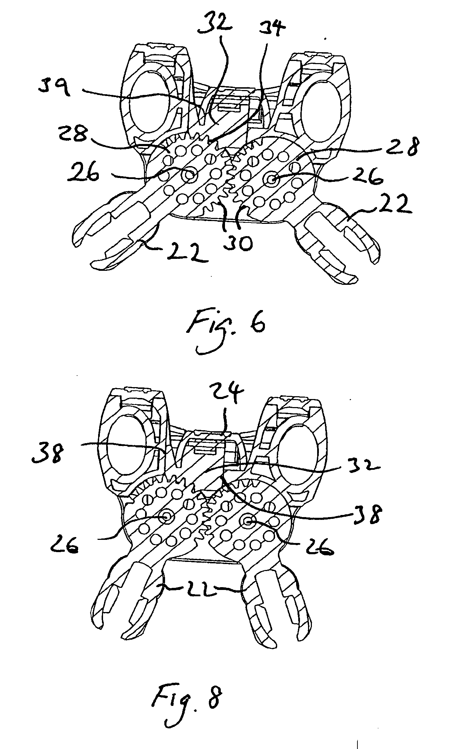

In the view shown in Figure 2, a detent operating lever 24 of the device is in a raised position. The manner in which the intended upper leg ends 22 are pivoted relative to the housing block 12 is shown in Figures 6 to 9.

With reference to Figure 6, each intended upper leg end 22 is pivotable about a respective pivot 26, each of which comprises a generally horizontal pin passing through the centre of generally circular spur portions 28 of the intended upper leg ends 22. Gear teeth 30 are uniformly spaced around the periphery of these circular portions 28. They intermesh at a position midway between the pivots 26. As a result, when one of the intended upper leg ends 22 pivots or rotates about its pivot 26 through a given angle in a clockwise sense, the other intended upper leg end 22 rotates about its pivot 26 through the same angle in an anticlockwise sense, so that movement of the leg portions 18 is like a scissor action.

The upper leg ends 22 are shown in Figure 6 with a given splay angle, and are held in this position by a detent 32. The latter has gear teeth 34 around an arcuate concave lower portion of the detent 32, so that it is like a brake shoe. The gear teeth 34 interengage with the gear teeth 30 of one of the upper leg ends 22 to lock the latter at a given splay angle.

The detent 32 may be raised out of engagement with the upper leg end 22 by raising the operating lever 24 of the device, to which the detent 32 is coupled. The latter is constrained to move in an upward and downward direction, against lateral movement, by internal wall portions 38 of the housing block 12. In the closed position of the detent operating lever 24, a portion 39 thereof is wedged between two portions of the detent 32 to secure the latter further in its locking position.

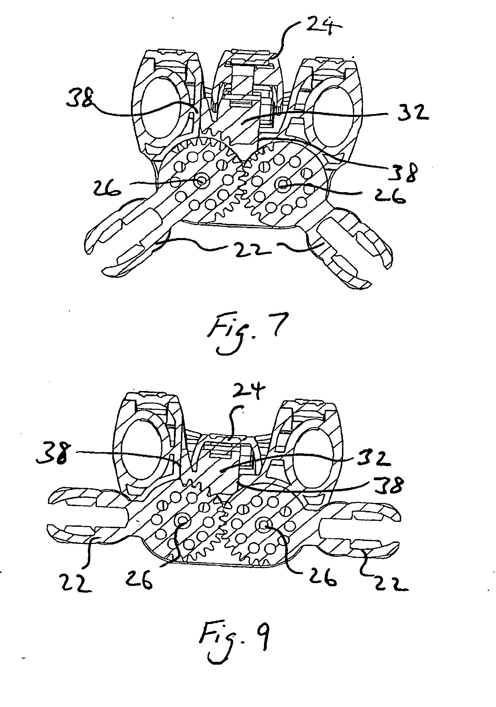

It will be appreciated that the detent 32 can be used to lock the upper leg ends 22 at different splay angles as shown in Figures 8 and 9.

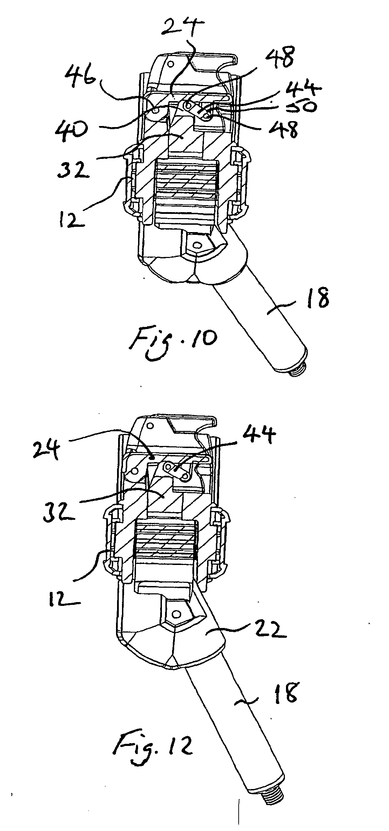

Figures 10 to 13 show the construction of the detent operating lever 24 in greater detail.

With reference to Figure 10, an upper portion 40 of the detent 32 is coupled to the detent operating lever 24 by way of a pivotal linkage 44. The lever 24 itself is pivoted relative to the housing block 12 by a pivot 46 having a generally horizontal pivot pin. The linkage 44 is connected by respective horizontal pivot pins 48 to the upper portion 40 of the detent 32 and a downwardly dependent lug 50 of the lever 24.

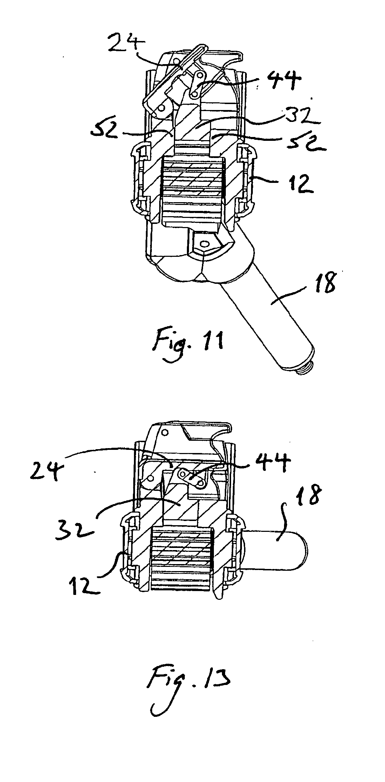

The lever 24 may be pivoted about its pivot 46 to a raised position as shown in Figure 11, in which the detent 32 is lifted out of engagement with the relevant upper leg end 22 so that the leg ends 22 are now free to pivot or rotate about their respective pivots 26.

With the leg ends 22 in a desired position, for example the position shown in Figure 12 or the position shown in Figure 13, the detent operating lever 24 may now be pivoted about its pivot 46 to lower the detent 32.

In being raised and lowered in this way the detent 32 is constrained to upward and downward movement, against forward and backward movement, by internal wall portions 52 of the housing block 12.

As the detent operating lever 24 is lowered, the linkage 44 is urged beyond its horizontal position, at which the materials of the lug portion 50 and the upper end 40 of the detent 32 are under stress, whereafter it is rotated further about its pivots 48 to an over centre, downwardly slanting position shown in Figures 12 and 13 so that the lever 24 snaps into its closed position shown in those Figures with the detent 32 now once again engaging the relevant upper leg end 22 to lock the leg ends 22 in position with their different splay angle. The detent 32, with the lever 24 and linkage 44 therefore constitute a locking mechanism, which with the intermeshing gears constitutes a geared indexing for the splay of the legs. The snap action mechanism urges the lever 24 either to its open position or its closed position.

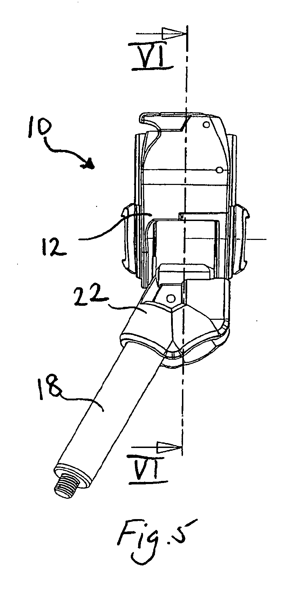

It will be appreciated that the support device shown in Figures 1 to 13 may constitute or be part of an angling rod pod. Thus, two such devices as illustrated in Figures 1 to 13 may be provided at opposite ends of two horizontal bars (not shown) passing through the apertures 14 of the two devices, so that together the two devices hold these bars in position. The bars may be further provided with bankstick supports at their respective extremities, to create a complete angling rod pod.

Numerous variations and modifications to the illustrated device may occur to the reader without taking the resulting construction outside the scope of the present invention as defined by the appended claims. For example, the detent 32 may engage the teeth of both upper leg ends 22 and not just one of them.

## Claims

1. A support device (10) having at least two leg portions (18) which can be splayed apart by different amounts, in which intended respective upper ends (22) of the said at least two leg portions (18) pivot about respective pivots (26), **characterized in that** said leg portions (18) interengage one another by intermeshing gear teeth (30) so that when one of the leg portions (18) is pivoted about its pivot (26) through a given angle in a clockwise sense, the other leg portion (18) is pivoted about its pivot (26) through the same angle in an anticlockwise sense, the device (10) also having a detent (32) which engages the intended upper end (22) of at least one of the said at least two leg portions (18) to lock it in a selected position, so that the other of the said at least two leg portions (18) is also locked in a corresponding position.

2. A support device according to claim 1, **characterised in that** the engagement between the detent (32) and the intended upper end (22) of the said at least one of the said at least two leg portions (18) is such as to allow the leg portions (18) to be locked in any selected one of a plurality of different positions in which the leg portions are splayed by respective different amounts.

3. A support device according to claim 1 or claim 2, **characterised in that** the detent (32) engages gear teeth (30) at the intended upper end (22) of the said at least one of the said at least two leg portions (18).

4. A support device according to claim 3, **characterised in that** the detent (32) itself has a plurality of teeth (34) which interengage with those (30) of the intended upper end (22) of the said at least one of the said at least two leg portions (18).

5. A support device according to any preceding claim, **characterised in that** the detent (32) is movable between a position in which it engages the intended upper end (22) of the said at least one of the said at least two leg portions (18) to a position in which it is disengaged therefrom, by upward and downward movement of the detent (32).

6. A support device according to claim 5, **characterised in that** the detent (32) is constrained to such upward/downward movement by wall portions (38) of the device (10).

7. A support device according to any preceding claim, **characterised in that** the detent (32) is provided with a snap action device (44, 48) to enable it to be moved into its locking position by way of a snap action.

8. A support device according to claim 7 read as appended to claim 5 or claim 6, **characterised in that** the snap action is achieved by having the detent (32) coupled by a pivotal linkage (44, 48) to a lever (24) which is itself pivoted at one end (46) so as to be pivotal between an open position in which the detent (32) is in a raised disengaging position and a closed position in which the linkage (44, 48) is beyond a dead point so that the lever (24) has been snapped into its closed position and the detent (32) is in a lower locking position.

9. An angling rod pod comprising a support device (10) as claimed in any preceding claim.

## Patentansprüche

1. Haltevorrichtung (10) mit mindestens zwei Beinabschnitten (18), die sich unterschiedlich weit auseinander spreizen lassen, wobei vorgesehene jeweilige obere Enden (22) der mindestens zwei Beinabschnitte (18) um entsprechende Drehzapfen (26) drehbar gelagert sind, **dadurch gekennzeichnet, dass** die Beinabschnitte (18) über eine ineinandergreifende Verzahnung (30) miteinander im Eingriff sind, so dass, wenn einer der Beinabschnitte (18) in einem vorgegebenen Winkel im Uhrzeigersinn um seinen Drehzapfen (26) geschwenkt wird, der andere Beinabschnitt (18) im gleichen Winkel entgegen dem Uhrzeigersinn um seinen Drehzapfen (26) geschwenkt wird, wobei die Vorrichtung (10) außerdem eine Arretierung (32) aufweist, die in das vorgesehene obere Ende (22) mindestens eines der mindestens zwei Beinabschnitte (18) eingreift, um ihn in einer gewählten Position zu verriegeln, so dass der andere der mindestens zwei Beinabschnitte (18) ebenfalls in einer entsprechenden Position verriegelt wird.

2. Haltevorrichtung nach Anspruch 1, **dadurch gekennzeichnet, dass** der Eingriff zwischen der Arretierung (32) und dem vorgesehenen oberen Ende (22) des mindestens einen der mindestens zwei Beinabschnitte (18) dergestalt ist, dass er eine Verriegelung der Beinabschnitte (18) in jeder gewählten von mehreren unterschiedlichen Positionen gestattet, in denen die Beinabschnitte (18) jeweils unterschiedlich weit auseinander gespreizt sind.

3. Haltevorrichtung nach Anspruch 1 oder 2, **dadurch gekennzeichnet, dass** die Arretierung (32) in eine Verzahnung (30) am vorgesehenen oberen Ende (22) des mindestens einen der mindestens zwei Beinabschnitte (18) eingreift.

4. Haltevorrichtung nach Anspruch 3, **dadurch gekennzeichnet, dass** die Arretierung (32) selbst eine Vielzahl von Zähnen (34) aufweist, die mit den Zähnen (30) des vorgesehenen oberen Endes (22) des mindestens einen der mindestens zwei Beinabschnitte (18) im Eingriff sind.

5. Haltevorrichtung nach einem der vorstehenden Ansprüche, **dadurch gekennzeichnet, dass** die Arretierung (32) zwischen einer Position, in der sie im Eingriff mit dem vorgesehenen oberen Ende (22) des mindestens einen der mindestens zwei Beinabschnitte (18) ist, und einer Position, in der sie nicht im Eingriff mit diesem ist, durch eine Auf- und Abwärtsbewegung der Arretierung (32) verschiebbar ist.

6. Haltevorrichtung nach Anspruch 5, **dadurch gekennzeichnet, dass** die Arretierung (32) durch Wandabschnitte (38) der Vorrichtung (10) eine solche Auf- und Abwärtsbewegung zwangläufig ausführt.

7. Haltevorrichtung nach einem der vorstehenden Ansprüche, **dadurch gekennzeichnet, dass** die Arretierung (32) mit einer Schnappeinrichtung (44, 48) versehen ist, damit sie über eine Schnappfunktion in ihre Verriegelungsposition verschoben werden kann.

8. Haltevorrichtung nach Anspruch 7, soweit sich dieser auf Anspruch 5 oder 6 bezieht, **dadurch gekennzeichnet, dass** die Schnappfunktion erzielt wird, indem die Arretierung (32) über eine Schwenkverbindung (44, 48) mit einem Hebel (24) gekoppelt ist, der seinerseits an einem Ende (46) drehbar gelagert ist, so dass er schwenkbar ist zwischen einer geöffneten Stellung, in der sich die Arretierung (32) in einer angehobenen Lösestellung befindet, und einer geschlossenen Stellung, in der sich die Verbindung (44, 48) außerhalb eines Totpunkts befindet, so dass der Hebel (24) in seine geschlossene Stellung eingerastet ist und die Arretierung (32) in eine untere Verriegelungsposition.

9. Angelrutenauflage, die eine Haltevorrichtung (10) nach einem der vorstehenden Ansprüche umfasst.

## Revendications

1. Dispositif de support (10) ayant au moins deux parties formant pieds (18) qui peuvent être écartées à des degrés d'écartement divers, dans lequel les extrémités supérieures (22) respectives prévues desdites au moins deux parties formant pieds (18) pivotent autour de pivots (26) respectifs, **caractérisé en ce que** lesdites parties formant pieds (18) viennent en prise mutuellement les unes avec les autres à l'aide de dents (30) mutuellement imbriquées, de sorte que, lorsqu'une des parties formant pieds (18) pivote dans le sens des aiguilles d'une montre autour de son pivot (26) selon un angle donné, l'autre partie formant pied (18) pivote autour de son pivot (26) selon le même angle dans le sens inverse des aiguilles d'une montre, le dispositif (10) ayant également une détente (32) qui vient en prise avec l'extrémité supérieure (22) prévue d'au moins une desdites au moins deux parties formant pieds (18) pour la bloquer dans une position choisie, de manière que l'autre desdites au moins deux parties formant pieds (18) soit également bloquée dans une position correspondante.

2. Dispositif de support selon la revendication 1, **caractérisé en ce que** la mise en prise entre la détente (32) et l'extrémité supérieure (22) prévue de ladite au moins une desdites au moins deux parties formant pieds (18) est telle qu'elle permet le blocage des parties formant pieds (18) dans n'importe quelle position parmi une pluralité de positions différentes dans lesquelles les parties formant pieds sont écartées à des degrés divers.

3. Dispositif de support selon la revendication 1 ou la revendication 2, **caractérisé en ce que** la détente (32) vient en prise avec les dents (30) à l'extrémité supérieure (22) prévue de ladite au moins une desdites au moins deux parties formant pieds (18).

4. Dispositif de support selon la revendication 3, **caractérisé en ce que** la détente (32) proprement dite possède une pluralité de dents (34) venant mutuellement en prise avec celles (30) de l'extrémité supérieure (22) prévue de ladite au moins une desdites au moins deux parties formant pieds (18).

5. Dispositif de support selon l'une quelconque des revendications précédentes, **caractérisé en ce que** la détente (32) est mobile entre une position dans laquelle elle vient en prise avec l'extrémité supérieure (22) prévue de ladite au moins une desdites au moins deux parties formant pieds (18) et une position dans laquelle elle est désolidarisée de celle-ci, par un mouvement ascendant et descendant de la détente (32).

6. Dispositif de support selon la revendication 5, **caractérisé en ce que** la détente (32) est limitée à ce mouvement ascendant/descendant par les parties de paroi (38) du dispositif (10).

7. Dispositif de support selon l'une quelconque des revendications précédentes, **caractérisé en ce que** la détente (32) est munie d'un dispositif d'encliquetage (44, 48) pour lui permettre de se déplacer dans sa position de blocage par encliquetage.

8. Dispositif de support selon la revendication 7 lorsqu'elle dépend de la revendication 5 ou de la revendication 6, **caractérisé en ce que** l'action d'encliquetage est obtenue en ayant la détente (32) couplée par liaison pivotante (44, 48) à un levier (24) qui lui-même pivote à une extrémité (46) afin de pouvoir pivoter d'une position ouverte dans laquelle la détente (32) est dans une position de désolidarisation relevée à une position fermée dans laquelle la liaison (44, 48) va au-delà d'un point mort, de sorte que le levier (24) a été enclenché dans sa position fermée et la détente (32) se trouve dans une position de blocage inférieure.

9. Rod pod pour la pêche comprenant un dispositif de support (10) selon l'une quelconque des revendications précédentes.
